# EUROPEAN PATENT SPECIFICATION

(11) **EP 1 469 228 B1**
(45) Date of publication and mention of the grant of the patent: **21.06.2006**
(21) Application number: 02795467.6
(22) Date of filing: 17.12.2002
(51) Int. Cl.: F16F 15/30

(54) **FLYWHEEL HAVING AN OFFSET CENTER OF MASS WITH RESPECT TO THE AXIS OF ROTATION.**
SCHWUNGRAD MIT EINEM VERSETZTEN MASSENSCHWERPUNKT BEZÜGLICH DER DREHACHSE
VOLANT A POINT D'EQUILIBRE DECALE PAR RAPPORT A L'AXE DE ROTATION

(30) Priority: 18.12.2001 RU 2001134046
(43) Date of publication of application: 20.10.2004
(73) Proprietor: Chentemirov, Alexandr Minasovich, Moscow, 115088 (RU)
(72) Inventor: CHENTEMIROV, Alexandr Minasovich, Moskow, 115088 (RU); PAPUK, Svetlana Nikolaevna, Moskovskaya obl., 143952 (RU)
(74) Representative: Lord, Hilton David
(86) International application number: PCT/RU2002/000534
(87) International publication number: WO 2003/052289

(56) References cited:
- WO-A1-99/09636
- RU-C1- 2 068 514
- RU-C1- 2 114 497
- RU-C2- 2 181 170
- US-A- 3 528 316

## Description

### Field of the Invention

The present invention relates to mechanical and electric machine engineering.

### Background of the Invention

A flywheel with the center of mass offset from the rotation axis is dscribed e.g. in WO-A-00/52356. The flywheel has a shape formed by rotation of a geometric figure symmetric about the rotation axis and split into two parts, e.g. of equal volume, by a plane passing at an angle smaller than ninety degrees and greater than zero degrees to the rotation axis, wherein the mass of one part is many times greater than that of the other part, e.g. a hollow one. Such a flywheel, being secured on a shaft and driven into rotation, does not generally generate lateral mechanical vibrations. The flywheel however suffers detrimental longitudinal mechanical vibrations.

### Summary of the Invention

The object of the present invention is to provide a flywheel with the center of mass offset from the axis of rotation, which flywheel being secured on a shaft and driven into rotation, not only does not generate detrimental lateral mechanical vibrations, but also substantially reduces longitudinal mechanical vibrations as compared to a conventional flywheel.

The above result is attained by a flywheel with the center of mass offset from the axis of rotation in accordance with the present invention as defined in claim 1, the flywheel having a shape formed by rotation, around the rotation axis, of a geometric figure symmetric about the rotation axis and the axis perpendicular to the rotation axis, and split into two parts, e.g. of equal volume, by a plane passing at an angle greater that forty five degrees and smaller than ninety degrees to the rotation axis. The above two parts are rotated relative to each other around the rotation axis at an angle no greater than ninety degrees.

The invention essentially reduces the longitudinally oscillating mass of the flywheel, this enabling the longitudinal vibrations of the rotated flywheel to be substantially reduced as compared to a conventional flywheel.

### Brief Description of the Drawing

The invention will become apparent from the following description of a preferred embodiment with reference to the accompanying drawing which shows a general schematic view of a flywheel with the center of mass offset from the rotation axis.

### Description of the Preferred Embodiment

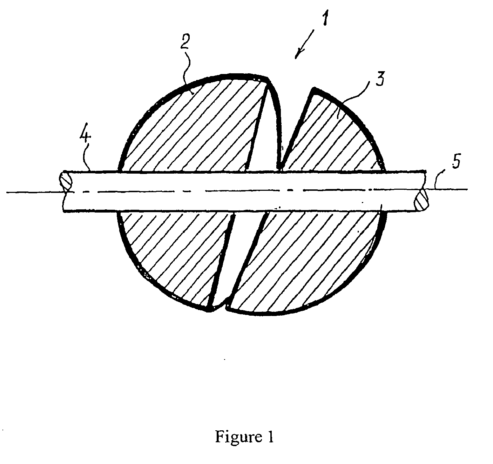

A preferred embodiment of a flywheel 1 (Fig.1) has a shape formed by splitting a sphere into two parts 2 and 3 which are rotated relative to each other at an angle no greater than 90° (degrees of arc). The flywheel is mounted on a shaft 4 whose axis coincides with the rotation axis 5.

It has been experimentally established that such a flywheel with the center of mass offset from the rotation axis 5 enables the object of the invention to be attained.

### Industrial Applicability

A flywheel with the center of mass offset from the rotation axis can be used on shafts of reciprocating motors and electric motors to amplify power.

## Claims

1. A flywheel (1) with the center of mass offset from the rotation axis (5), wherein the flywheel (1) has a shape formed by rotation, around the rotation axis (5), of a geometric figure symmetric about the rotation axis (5) and the axis perpendicular to the rotation axis, and split into two parts (2, 3), e.g. of equal volume, by a plane passing at an angle greater that forty five degrees and smaller than ninety degrees to the rotation axis, **characterized by** the two parts being rotated relative to each other around the rotation axis at an angle no greater than ninety degrees.

## Patentansprüche

1. Ein Schwungrad (1) mit einem bezüglich der Rotationsachse (5) versetzten Massenschwerpunkt, wobei das Schwungrad (1) eine um die Rotationsachse (5) durch Rotation geformte Form einer geometrischen Figur hat, die symmetrisch um die Rotationsachse (5) und die zur Rotationsachse senkrechten Achse ist, und in zwei Teile (2, 3) geteilt ist, zum Beispiel von gleichem Volumen, durch eine Ebene die durch einen Winkel führt, der größer als fünfundvierzig Grad und kleiner als neunzig Grad bezüglich der Rotationsachse ist, **dadurch gekennzeichnet, dass** die beiden Teile relativ zueinander um die Rotationsachse in einem Winkel nicht größer als neunzig Grad gedreht werden

## Revendications

1. Volant (1), comportant un centre de masse décalé par rapport à l'axe de rotation (5), le volant (1) ayant une forme formée par rotation autour de l'axe de rotation (5) d'une figure géométrique symétrique autour de l'axe de rotation (5) et à l'axe perpendiculaire à l'axe de rotation, et étant divisé en deux parties (2, 3), ayant par exemple un volume égal, par un plan s'étendant à un angle supérieur à quarante-cinq degrés et inférieur à quatre-vingt-dix degrés par rapport à l'axe de rotation, **caractérisé en ce que** les deux parties sont tournées l'une par rapport à l'autre autour de l'axe de rotation à un angle non supérieur à quatre-vingt-dix degrés.
